# EUROPEAN PATENT SPECIFICATION

(11) **EP 4 430 254 B1**
(45) Date of publication and mention of the grant of the patent: **08.10.2025**
(21) Application number: 23841484.1
(22) Date of filing: 06.12.2023
(51) Int. Cl.: E04F 17/00, B66B 11/00, F16B 7/14, F16B 7/04, F16B 7/18

(54) **A STRUCTURE FOR CONSTRUCTING AN ELEVATOR SHAFT**
STRUKTUR ZUR KONSTRUKTION EINES AUFZUGSSCHACHTS
STRUCTURE DE CONSTRUCTION DE CAGE D'ASCENSEUR

(30) Priority: 01.02.2023 IN 202341006420
(43) Date of publication of application: 18.09.2024
(73) Proprietor: Vishal, Ruphavathy, Chennai 6000020 (IN)
(72) Inventor: Vishal, Ruphavathy, Chennai 6000020 (IN)
(74) Representative: Caldon, Giuliano
(86) International application number: PCT/IB2023/062312
(87) International publication number: WO 2024/161200

(56) References cited:
- EP-A1- 4 036 043
- CN-A- 107 419 894
- CN-A- 109 113 306
- CN-A- 113 958 133
- US-A1- 2021 198 908

## Description

### EARLIEST PRIORITY DATE

This Application claims priority from a Complete patent application filed in India having Patent Application No. 202341006420 filed on 01st day of February 2023 and titled A STRUCTURE FOR CONSTRUCTING AN ELEVATOR SHAFT.

### FIELD OF INVENTION

Embodiments of the present disclosure relate to the field of elevators and more particularly to a structure for constructing an elevator shaft.

### BACKGROUND

An elevator is a machine which transports people and freights between different levels of a structure. The structure may include a building, a maritime vessel and the like. The elevator may include a number of components, such as a cabin, cables, counterweights, guide rails and a motor. The cabin may be used for transporting the people and the freights in an enclosed manner. The motor may be coupled to the cabin via the cables to move the cabin. The guide rails may guide the cabin during motion and the counterweights may provide stability and balance to the cabin during the motion.

For mounting the counterweights, the cables, the guide rails, the cabin, and the motor, a support structure may be required. The support structure may include at least one of a reinforced cement concrete wall and a masonry wall of a predefined thickness. Construction of the support structure is a laborious task which may require skilled labors. Also, construction of the support structure may be a time consuming task. Further, the support structure may hamper aesthetics of the structure. Moreover, portability of the support structure is another point of concern.

Structures for constructing an elevator shaft are known from CN 109 113 306 A or EP 4 036 043 A1.

Hence, there is a need for an improved structure for constructing an elevator shaft to address the aforementioned issue(s).

### BRIEF DESCRIPTION

In accordance with the invention, a structure for constructing an elevator shaft according to claim 1 is provided. The structure includes a first column adapted to withstand stress acting in one or more directions. The first column is constructed by coupling a first groove to a plurality of 'L' shaped sections positioned adjacent to the first groove. The plurality of 'L' shaped sections are interconnected by a semicircular section forming at least one slot at a junction of coupling between the plurality of 'L' shaped sections and the semi-circular section. The structure also includes a second column positioned inside the first column. The second column is adapted to provide reinforcement to the first column. The second column includes at least five sides including a first side, a second side, a third side, a fourth side and a fifth side. The first side and the fifth side are in contact with at least one flange of the plurality of corresponding 'L' shaped sections. The second side, third side, and the fourth side are adapted to form an enclosed space with the semicircular section. The third side includes a second groove adapted to accommodate a first plurality of fasteners to secure the second column to the first column. The structure further includes a base plate mechanically coupled to the second column. The base plate includes a plurality of projections adapted to secure the second column to the base plate via a second plurality of fasteners. The structure also includes a plurality of beams located above the base plate and mechanically coupled to the first column. The plurality of beams includes a corresponding third groove and a corresponding fourth groove. The corresponding third groove and the corresponding fourth groove are adapted to receive a corresponding covering plate and a corresponding right angled section respectively to mount a corresponding sheet in between the corresponding covering plate and the corresponding right angled section. The corresponding sheet is adapted to form an enclosed elevator shaft, thereby forming the structure for constructing the elevator shaft.

To further clarify the advantages and features of the present disclosure, a more explicit description of the disclosure will follow by reference to specific embodiments thereof, which are illustrated in the appended figures. It is to be appreciated that these figures depict typical embodiments of the disclosure and are therefore not to be considered as limiting the scope of the invention, which is defined by the appended claims. The disclosure will be described and explained with additional details with the appended figures.

### BRIEF DESCRIPTION OF THE DRAWINGS

The disclosure will be described and explained with additional specificity and detail with the accompanying figures in which:
FIG. 1 is a schematic representation of a structure for constructing an elevator shaft in accordance with an embodiment of the present disclosure;
FIG. 2 is a schematic representation of one embodiment of the structure of FIG. 1, depicting detailed view of a base plate and one or more projections in accordance with an embodiment of the present disclosure;
FIG. 3 is a schematic representation of another embodiment of the structure of FIG. 1, depicting positioning of a first column over a second column above the base plate in accordance with an embodiment of the present disclosure;
FIG. 4 is a schematic representation of yet another embodiment of the structure of FIG. 1, depicting operational arrangement of a plurality of beams with respect to the first column in accordance with an embodiment of the present disclosure;
FIG. 5 is a schematic representation of yet another embodiment of the structure of FIG. 1, depicting detailed diagram of a corresponding third groove, and a corresponding fourth groove in accordance with an embodiment of the present disclosure; and
FIG. 6 is a schematic representation of yet another embodiment of the structure of FIG. 1, depicting coupling of at least one slot with a right angled section in accordance with an embodiment of the present disclosure.

Further, those skilled in the art will appreciate that elements in the figures are illustrated for simplicity and may not have necessarily been drawn to scale. Furthermore, in terms of the construction of the device, one or more components of the device may have been represented in the figures by conventional symbols, and the figures may show only those specific details that are pertinent to understanding the embodiments of the present disclosure so as not to obscure the figures with details that will be readily apparent to those skilled in the art having the benefit of the description herein.

### DETAILED DESCRIPTION

To promote an understanding of the principles of the disclosure, reference will now be made to the embodiment illustrated in the figures and specific language will be used to describe them. It will nevertheless be understood that no limitation of the scope of the disclosure is thereby intended. Such alterations and further modifications in the illustrated system, and such further applications of the principles of the disclosure as would normally occur to those skilled in the art are to be construed as being within the scope of the present disclosure.

The terms "comprises", "comprising", or any other variations thereof, are intended to cover a non-exclusive inclusion, such that a process or method that comprises a list of steps does not include only those steps but may include other steps not expressly listed or inherent to such a process or method. Similarly, one or more devices or sub-systems or elements or structures or components preceded by "comprises... a" does not, without more constraints, preclude the existence of other devices, sub-systems, elements, structures, components, additional devices, additional sub-systems, additional elements, additional structures, or additional components. Appearances of the phrase "in an embodiment", "in another embodiment" and similar language throughout this specification may, but not necessarily do, all refer to the same embodiment.

Unless otherwise defined, all technical and scientific terms used herein have the same meaning as commonly understood by those skilled in the art to which this disclosure belongs. The system, methods, and examples provided herein are only illustrative and not intended to be limiting.

In the following specification and the claims, reference will be made to a number of terms, which shall be defined to have the following meanings. The singular forms "a", "an", and "the" include plural references unless the context clearly dictates otherwise.

Embodiments of the present disclosure relate to a structure for constructing an elevator shaft. The structure includes a first column adapted to withstand stress acting in one or more directions. The first column is constructed by coupling a first groove to a plurality of 'L' shaped sections positioned adjacent to the first groove. The plurality of 'L' shaped sections are interconnected by a semicircular section forming at least one slot at a junction of coupling between the plurality of 'L' shaped sections and the semi-circular section. The structure also includes a second column positioned inside the first column. The second column is adapted to provide reinforcement to the first column. The second column includes at least five sides including a first side, a second side, a third side, a fourth side and a fifth side. The first side and the fifth side are in contact with at least one flange of the plurality of corresponding 'L' shaped sections. The second side, third side, and the fourth side are adapted to form an enclosed space with the semicircular section. The third side includes a second groove adapted to accommodate a first plurality of fasteners to secure the second column to the first column. The structure further includes a base plate mechanically coupled to the second column. The base plate includes a plurality of projections adapted to secure the second column to the base plate via a second plurality of fasteners. The structure also includes a plurality of beams located above the base plate and mechanically coupled to the first column. The plurality of beams includes a corresponding third groove and a corresponding fourth groove. The corresponding third groove and the corresponding fourth groove are adapted to receive a corresponding covering plate and a corresponding right angled section respectively to mount a corresponding sheet in between the corresponding covering plate and the corresponding right angled section. The corresponding sheet is adapted to form an enclosed elevator shaft, thereby forming the structure for constructing the elevator shaft.

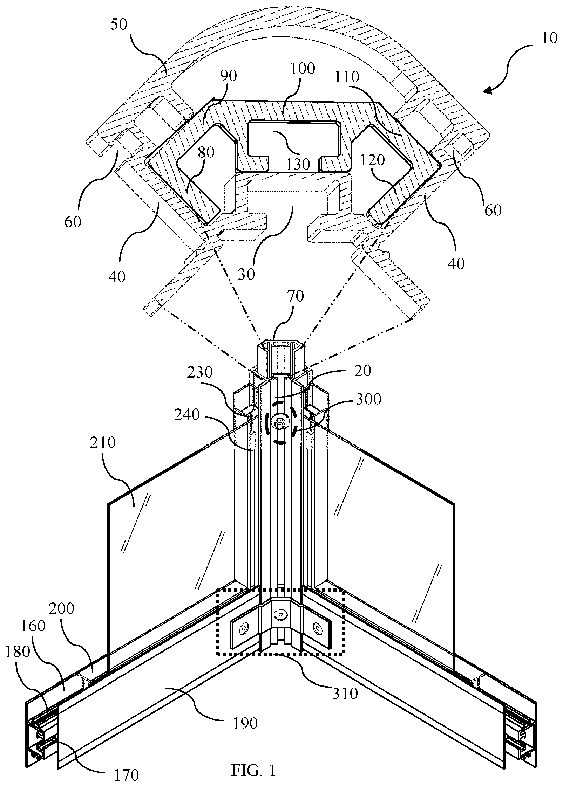

FIG. 1 is a schematic representation of a structure (10) for constructing an elevator shaft in accordance with an embodiment of the present disclosure. The structure (10) includes a first column (20) adapted to withstand stress acting in one or more directions. In one embodiment, the stress may include a plurality of types of stresses including a compression, tension, torsion, shear, and fatigue. In some embodiments, the one or more directions may include a vertical direction. In a specific embodiment, the one or more directions may include a horizontal direction.

Further, the first column (20) is constructed by coupling a first groove (30) to a plurality of 'L' shaped sections (40) positioned adjacent to the first groove (30). In one embodiment, the first groove (30) may be located in between the plurality of 'L' shaped sections (40). The plurality of 'L' shaped sections (40) are interconnected by a semicircular section (50) forming at least one slot (60) at a junction of coupling between the plurality of 'L' shaped sections (40) and the semi-circular section (50). The structure (10) also includes a second column (70) positioned inside the first column (20). The second column (70) is adapted to provide reinforcement to the first column (20).

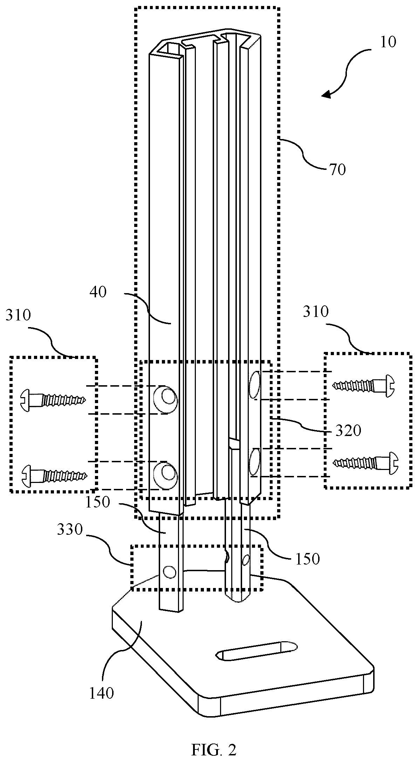

Furthermore, the second column (70) includes at least five sides including a first side (80), a second side (90), a third side (100), a fourth side (110) and a fifth side (120). The first side (80) and the fifth side (120) are in contact with at least one flange of the plurality of corresponding 'L' shaped sections (40). The second side (90), third side (100), and the fourth side (110) are adapted to form an enclosed space with the semicircular section (50). The third side (100) includes a second groove (130) adapted to accommodate a first plurality of fasteners (300) to secure the second column (70) to the first column (20). The structure (10) further includes a base plate (FIG. 2, 140) mechanically coupled to the second column (70). The structure with base plate is further described in FIG.2.

FIG. 2 is a schematic representation of one embodiment of the structure of FIG. 1, depicting detailed view of a base plate and one or more projections in accordance with an embodiment of the present disclosure. The base plate (140) includes a plurality of projections (150) adapted to secure the second column (70) to the base plate (140) via a second plurality of fasteners (310). In some embodiments, the first plurality of fasteners (300) and the second plurality of fasteners (310) may include, but not limited to, screws, nails, nuts, bolts, washers, anchors, rivets and the like. The first plurality of fasteners (300) and the second plurality of fasteners (310) shown in the FIG. 2 is representation from example point of view. In one embodiment, the second column (70) may include a first plurality of holes (320) located on the plurality of 'L' shaped sections (40). In some embodiments, the first plurality of holes (320) may be adapted to concentrically align with respective cavities (330) located on the plurality of projections (150) when the second column (70) is placed over the plurality of projections (150). In such an embodiment, the second plurality of fasteners (310) may secure the second column (70) to the plurality of projections (150) by moving through the respective cavities (330) and the first plurality of holes (320) during fastening.

Referring back to FIG. 1, the structure (10) also includes a plurality of beams (160) located above the base plate (140) and mechanically coupled to the first column (20). The plurality of beams (160) includes a corresponding third groove (170) and a corresponding fourth groove (180). The corresponding third groove (170) and the corresponding fourth groove (180) are adapted to receive a corresponding covering plate (190) and a corresponding right angled section (200) respectively to mount a corresponding sheet (210) in between the corresponding covering plate (190) and the corresponding right angled section (200).

Moreover, in one embodiment, the corresponding sheet (210) may include, but not limited to, a poly carbonate sheet, an acrylic sheet and the like. In one embodiment, the right angled section (200) may include a track (230) including a liner (240) adapted to interface the sheet (210) with the right angled section (200). In one embodiment, the liner (240) may include, but not limited to, a hot liner, a dry liner, a finned liner and the like. The corresponding sheet (210) is adapted to form an enclosed elevator shaft, thereby forming the structure (10) for constructing the elevator shaft.

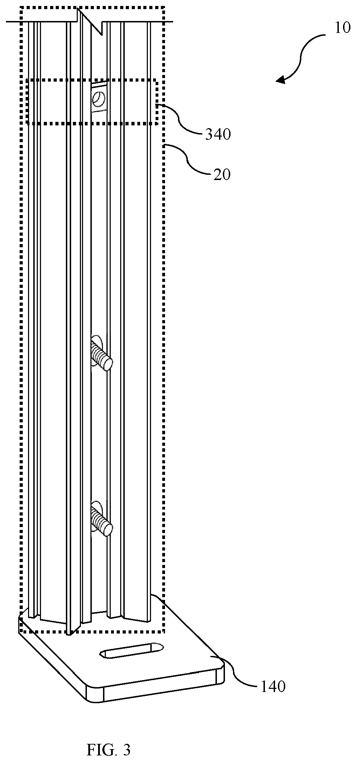

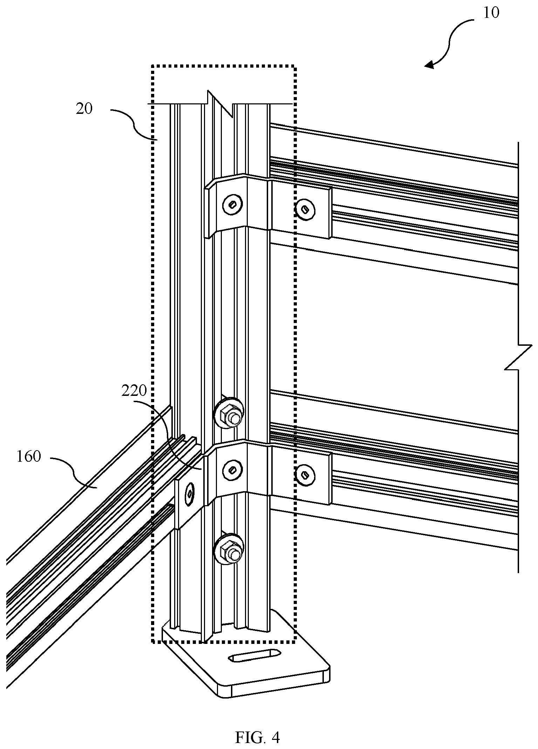

FIG. 3 is a schematic representation of another embodiment of the structure (10) of FIG. 1, depicting positioning of the first column (20) over the second column (70) above the base plate (140) in accordance with an embodiment of the present disclosure. In one embodiment, the first column (20) may include a second plurality of holes (340) positioned on the third side (10). In such an embodiment, the second groove (130) of the second column (70) may be secured to the first column (20) by running the first plurality of fasteners (300) through the second groove (130) and the second plurality of holes (340) located on the first column (20). Operational arrangement of the plurality of beams (160) with respect to the first column (20) is shown in FIG. 4.

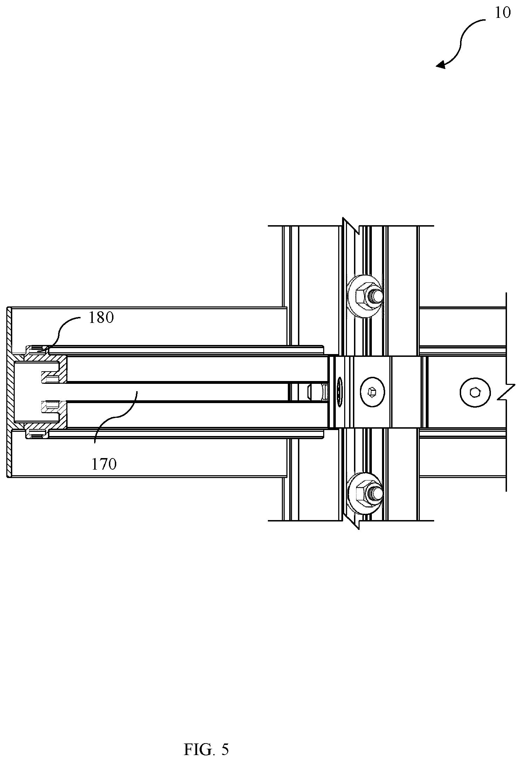

FIG. 4 is a schematic representation of yet another embodiment of the structure (10) of FIG. 1, depicting operational arrangement of the plurality of beams (160) with respect to the first column (20) in accordance with an embodiment of the present disclosure. In one embodiment, the plurality of beams (160) may be mechanically coupled to the first column (20) orthogonally. In some embodiments, the plurality of beams (160) may be coupled to the first column (20) via one or more corresponding brackets (220). Detailed diagram of the corresponding third groove (170) and the corresponding fourth groove (180) is shown in FIG. 5.

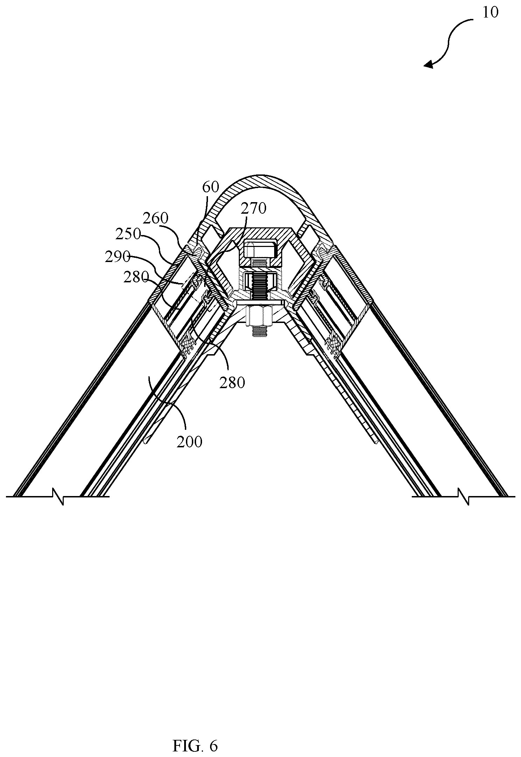

FIG. 6 is a schematic representation of yet another embodiment of the structure (10) of FIG. 1, depicting coupling of the at least one slot (60) with the right angled section (200) in accordance with an embodiment of the present disclosure. In one embodiment, the at least one slot (60) may be adapted to couple with the right angled section (200) through an angle section (250) including a protrusion (260) adapted to interlock with the at least one slot (60). In such an embodiment, the angle section (250) may include a fifth groove (270) adapted to interlock with a pair of flanges (280) associated with the right angled section (200) to secure the right angled section (200) to the angle section (250). In one embodiment, the pair of flanges (280) may include at least two notches (290) to grip the pair of flanges (280) to the fifth groove (270).

Various embodiments of the structure for constructing the elevator shaft described above enable various advantages. Construction of the elevator shaft using the first column, the second column, the base plate, and the plurality of beams provides modularity to the elevator shaft, thereby enabling effortless mounting of the elevator shaft in an optimum time duration.. The elevator shaft is capable of being assembled onsite which may further reduce transportation cost and complexity of installation. Presence of mechanical coupling between the right angled section and the at least one slot reduces the number of fasteners required to construct the elevator shaft, thereby reducing formation of the mechanical vibrations on the structure along with ensuring structural strength. The work force required for constructing the elevator shaft is minimal, thereby enabling further cost reduction. The first column, the second column, the base plate, and the plurality of beams are made up of lightweight materials, thereby reducing overall weight of the elevator shaft. The elevator shaft is capable of providing superior aesthetics to the structure. Further, the elevator shaft is capable of being assembled and dismantled multiple times, thereby ensuring portability of the same. Additionally, the elevator shaft is capable of being retrofitted to any of the structures that are already existing.

It will be understood by those skilled in the art that the foregoing general description and the following detailed description are exemplary and explanatory of the disclosure and are not intended to be restrictive thereof. While specific language has been used to describe the disclosure, any limitations arising on account of the same are not intended.

## Claims

1. A structure (10) for constructing an elevator shaft comprising:
a first column (20) adapted to withstand stress acting in one or more directions,
a second column (70) positioned inside the first column (20), wherein the second column (70) is adapted to provide reinforcement to the first column (20),
a base plate (140) mechanically coupled to the second column (70), wherein the base plate (140) comprises a plurality of projections (150) adapted to secure the second column (70) to the base plate (140) via a second plurality of fasteners (310); and
a plurality of beams (160) located above the base plate (140) and mechanically coupled to the first column (20),
**characterized in that**:
the first column (20) is constructed by coupling a first groove (30) to a plurality of 'L' shaped sections (40) positioned adjacent to the first groove (30),
wherein the plurality of 'L' shaped sections (40) are interconnected by a semi-circular section (50) forming at least one slot (60) at a junction of coupling between the plurality of 'L' shaped sections (40) and the semi-circular section (50); wherein the second column (70) comprises at least five sides comprising a first side (80), a second side (90), a third side (100), a fourth side (110) and a fifth side (120),
wherein the first side (80) and the fifth side (120) are in contact with at least one flange of the plurality of corresponding 'L' shaped sections (40), wherein the second side (90), third side (100), and the fourth side (110) are adapted to form an enclosed space with the semicircular section (50),
wherein the third side (100) comprises a second groove (130) adapted to accommodate a first plurality of fasteners (300) to secure the second column (70) to the first column (20);
wherein the plurality of beams (160) comprises a corresponding third groove (170) and a corresponding fourth groove (180),
wherein the corresponding third groove (170) and the corresponding fourth groove (180) are adapted to receive a corresponding covering plate (190) and a corresponding right angled section (200) respectively to mount a corresponding sheet (210) in between the corresponding covering plate (190) and the corresponding right angled section (200),
wherein the corresponding sheet (210) is adapted to form an enclosed elevator shaft, thereby forming the structure (10) for constructing the elevator shaft.

2. The structure (10) as claimed in claim 1, wherein the stress comprises a plurality of types of stresses comprising a compression, tension, torsion, shear, and fatigue.

3. The structure (10) as claimed in claim 1, wherein the one or more directions comprises a vertical direction.

4. The structure (10) as claimed in claim 1, wherein the one or more directions comprises a horizontal direction.

5. The structure (10) as claimed in claim 1, wherein the plurality of beams (160) are mechanically coupled to the first column (20) orthogonally.

6. The structure (10) as claimed in claim 1, wherein the plurality of beams (160) are coupled to the first column (20) via one or more corresponding brackets (220).

7. The structure (10) as claimed in claim 1, wherein the right angled section (200) comprises a track (230) comprising a liner (240) adapted to interface the sheet (210) with the right angled section (200).

8. The structure (10) as claimed in claim 1, wherein the at least one slot (60) is adapted to couple with the right angled section (200) through an angle section (250) comprising a protrusion (260) adapted to interlock with the at least one slot (60).

9. The structure (10) as claimed in claim 8, wherein the angle section (250) comprises a fifth groove (270) adapted to interlock with a pair of flanges (280) associated with the right angled section (200) to secure the right angled section (200) to the angle section (250).

10. The structure (10) as claimed in claim 9, wherein the pair of flanges comprises at least two notches (290) to grip the pair of flanges (280) to the fifth groove (270).

## Patentansprüche

1. Struktur (10) zur Konstruktion eines Aufzugsschachts, umfassend:
eine erste Säule (20), die geeignet ist, in einer oder mehreren Richtungen wirkender Beanspruchung standzuhalten,
eine zweite Säule (70), die im Inneren der ersten Säule (20) positioniert ist, wobei die zweite Säule (70) geeignet ist, die erste Säule (20) zu verstärken,
eine Grundplatte (140), die mechanisch mit der zweiten Säule (70) gekoppelt ist, wobei die Grundplatte (140) eine Vielzahl von Vorsprüngen (150) aufweist, die geeignet sind, die zweite Säule (70) an der Grundplatte (140) mit Hilfe einer zweiten Vielzahl von Befestigungselementen (310) zu sichern; und
eine Vielzahl von Trägern (160), die oberhalb der Grundplatte (140) angeordnet und mechanisch mit der ersten Säule (20) gekoppelt sind,
**dadurch gekennzeichnet, dass**:
die erste Säule (20) durch Koppeln einer ersten Nut (30) mit einer Vielzahl von an die erste Nut (30) angrenzenden "L"-förmigen Abschnitten (40) konstruiert wird,
wobei die Vielzahl "L"-förmiger Abschnitte (40) durch einen halbkreisförmigen Abschnitt (50) miteinander verbunden ist, der mindestens einen Schlitz (60) an einer Verbindungsstelle zwischen der Vielzahl "L"-förmiger Abschnitte (40) und dem halbkreisförmigen Abschnitt (50) bildet;
wobei die zweite Säule (70) mindestens fünf Seiten umfasst, die eine erste Seite (80), eine zweite Seite (90), eine dritte Seite (100), eine vierte Seite (110) und eine fünfte Seite (120) umfassen,
wobei die erste Seite (80) und die fünfte Seite (120) sich in Kontakt mit mindestens einem Flansch der Vielzahl entsprechender "L"-förmiger Abschnitte (40) befinden, wobei die zweite Seite (90), die dritte Seite (100) und die vierte Seite (110) geeignet sind, einen geschlossenen Raum mit dem halbkreisförmigen Abschnitt (50) zu bilden,
wobei die dritte Seite (100) eine zweite Nut (130) umfasst, die geeignet ist, eine erste Vielzahl von Befestigungselementen (300) aufzunehmen, um die zweite Säule (70) an der ersten Säule (20) zu sichern;
wobei die Vielzahl von Trägern (160) eine entsprechende dritte Nut (170) und eine entsprechende vierte Nut (180) umfasst,
wobei die entsprechende dritte Nut (170) und die entsprechende vierte Nut (180) geeignet sind, eine entsprechende Abdeckplatte (190) und einen entsprechenden rechtwinkligen Abschnitt (200) aufzunehmen, um jeweils eine entsprechende Platte (210) zwischen der entsprechenden Abdeckplatte (190) und dem entsprechenden rechtwinkligen Abschnitt (200) zu montieren,
wobei die entsprechende Platte (210) geeignet ist, einen geschlossenen Aufzugsschacht zu bilden und dadurch die Struktur (10) zur Konstruktion des Aufzugsschachts zu bilden.

2. Struktur (10) nach Anspruch 1, wobei die Beanspruchung eine Vielzahl von Beanspruchungsarten umfasst, darunter Druck, Zug, Torsion, Scherung und Ermüdung.

3. Struktur (10) nach Anspruch 1, wobei die eine oder mehrere Richtungen eine vertikale Richtung umfassen.

4. Struktur (10) nach Anspruch 1, wobei die eine oder mehrere Richtungen eine horizontale Richtung umfassen.

5. Struktur (10) nach Anspruch 1, wobei die Vielzahl von Trägern (160) orthogonal auf mechanische Weise mit der ersten Säule (20) gekoppelt ist.

6. Struktur (10) nach Anspruch 1, wobei die Vielzahl von Trägern (160) mit Hilfe einer oder mehrerer entsprechender Halterungen (220) mit der ersten Säule (20) gekoppelt ist.

7. Struktur (10) nach Anspruch 1, wobei der rechtwinklige Abschnitt (200) eine Schiene (230) umfasst, die eine Auskleidung (240) umfasst, die geeignet ist, die Platte (210) mit dem rechtwinkligen Abschnitt (200) zu verbinden.

8. Struktur (10) nach Anspruch 1, wobei der mindestens eine Schlitz (60) geeignet ist, mit dem rechtwinkligen Abschnitt (200) über einen Winkelabschnitt (250), der einen Vorsprung (260) umfasst, der geeignet ist, mit dem mindestens einen Schlitz (60) in Eingriff zu gelangen, gekoppelt zu werden.

9. Struktur (10) nach Anspruch 8, wobei der Winkelabschnitt (250) eine fünfte Nut (270) umfasst, die geeignet ist, mit einem Paar von Flanschen (280), die mit dem rechtwinkligen Abschnitt (200) verbunden sind, in Eingriff zu gelangen, um den rechtwinkligen Abschnitt (200) an dem Winkelabschnitt (250) zu sichern.

10. Struktur (10) nach Anspruch 9, wobei das Paar von Flanschen mindestens zwei Kerben (290) umfasst, um das Paar von Flanschen (280) an der fünften Nut (270) zu befestigen.

## Revendications

1. Structure (10) de construction d'une cage d'ascenseur comprenant :
une première colonne (20) apte à résister aux contraintes agissant dans une ou plusieurs directions,
une deuxième colonne (70) positionnée à l'intérieur de la première colonne (20), la deuxième colonne (70) étant apte à fournir un renforcement à la première colonne (20),
une plaque de base (140) couplée mécaniquement à la deuxième colonne (70), dans laquelle la plaque de base (140) comprend une pluralité de saillies (150) aptes à fixer la deuxième colonne (70) à la plaque de base (140) par l'intermédiaire d'une deuxième pluralité d'éléments de fixation (310) ; et
une pluralité de poutres (160) situées au-dessus de la plaque de base (140) et couplées mécaniquement à la première colonne (20),
**caractérisée en ce que** :
la première colonne (20) est construite par couplage d'une première rainure (30) à une pluralité de sections en forme de "L" (40) placées de manière adjacente à la première rainure (30),
dans laquelle la pluralité de sections en forme de "L" (40) sont interconnectées par une section semi-circulaire (50) formant au moins une fente (60) au niveau d'une jonction de couplage entre la pluralité de sections en forme de "L" (40) et la section semi-circulaire (50) ;
dans laquelle la deuxième colonne (70) comprend au moins cinq côtés comprenant un premier côté (80), un deuxième côté (90), un troisième côté (100), un quatrième côté (110) et un cinquième côté (120),
dans laquelle le premier côté (80) et le cinquième côté (120) sont en contact avec au moins une bride de la pluralité de sections en forme de "L" (40) correspondantes, dans laquelle le deuxième côté (90), le troisième côté (100) et le quatrième côté (110) sont aptes à former un espace fermé avec la section semi-circulaire (50),
dans laquelle le troisième côté (100) comprend une deuxième rainure (130) apte à loger une première pluralité d'éléments de fixation (300) pour fixer la deuxième colonne (70) à la première colonne (20) ;
dans laquelle la pluralité de poutres (160) comprend une troisième rainure (170) correspondante et une quatrième rainure (180) correspondante,
dans laquelle la troisième rainure (170) correspondante et la quatrième rainure (180) correspondante sont aptes à recevoir une plaque de recouvrement correspondante (190) et une section à angle droit (200) correspondante respectivement pour monter une feuille (210) correspondante entre la plaque de recouvrement (190) correspondante et la section à angle droit (200) correspondante,
dans laquelle la feuille (210) correspondante est apte à former une cage d'ascenseur fermée, formant ainsi la structure (10) de construction de la cage d'ascenseur.

2. Structure (10) selon la revendication 1, dans laquelle les contraintes comprennent une pluralité de types de contraintes comprenant une compression, une tension, une torsion, un cisaillement et une fatigue.

3. Structure (10) selon la revendication 1, dans laquelle l'une ou plusieurs directions comprennent une direction verticale.

4. Structure (10) selon la revendication 1, dans laquelle l'une ou plusieurs directions comprennent une direction horizontale.

5. Structure (10) selon la revendication 1, dans laquelle la pluralité de poutres (160) est couplée mécaniquement à la première colonne (20) de manière orthogonale.

6. Structure (10) selon la revendication 1, dans laquelle la pluralité de poutres (160) est couplée à la première colonne (20) par l'intermédiaire d'un ou plusieurs supports (220) correspondants.

7. Structure (10) selon la revendication 1, dans laquelle la section à angle droit (200) comprend une piste (230) comprenant une doublure (240) apte à mettre en interface la feuille (210) avec la section à angle droit (200).

8. Structure (10) selon la revendication 1, dans laquelle l'au moins une fente (60) est apte à se coupler avec la section à angle droit (200) par l'intermédiaire d'une section angulaire (250) comprenant une protubérance (260) apte à s'emboîter avec l'au moins une fente (60).

9. Structure (10) selon la revendication 8, dans laquelle la section angulaire (250) comprend une cinquième rainure (270) apte à s'emboîter avec une paire de brides (280) associées à la section à angle droit (200) afin de fixer la section à angle droit (200) à la section angulaire (250).

10. Structure (10) selon la revendication 9, dans laquelle la paire de brides comprend au moins deux encoches (290) pour saisir la paire de brides (280) vers la cinquième rainure (270).
